# EUROPEAN PATENT APPLICATION

(11) **EP 3 989 570 A1**
(43) Date of publication of application: **27.04.2022**
(21) Application number: 20827343.3
(22) Date of filing: 11.06.2020
(51) Int. Cl.: H04N 19/44, H04N 19/557

(54) **IMAGE DECODING DEVICE, IMAGE DECODING METHOD, AND PROGRAM**

(30) Priority: 20.06.2019 JP 2019114959
(71) Applicant: KDDI Corporation, Tokyo 163-8003 (JP)
(72) Inventor: UNNO, Kyohei, Fujimino-shi, Saitama 356-8502 (JP); KAWAMURA, Kei, Fujimino-shi, Saitama 356-8502 (JP); NAITO, Sei, Fujimino-shi, Saitama 356-8502 (JP)
(74) Representative: Fink Numrich Patentanwälte PartmbB
(86) International application number: PCT/JP2020/022974
(87) International publication number: WO 2020/255846

(57) **Abstract**

An image decoding device (200) includes: a motion vector decoding unit (241B) configured to decode a motion vector from coded data; and a refinement unit (241C) configured to search for the motion vector with a value of the motion vector decoded by the motion vector decoding unit (241B) as an initial value, and set the decoded motion vector as a final motion vector in a case where a searching cost at an initial searched point is larger than a predetermined threshold value or in a case where the searching cost at the initial searched point is equal to or larger than the threshold value.

## Description

### TECHNICAL FIELD

The present invention relates to an image decoding device, an image decoding method, and a program.

### BACKGROUND ART

Conventionally, a technique of applying refinement processing to a block that satisfies an application condition that only information acquirable on a decoding device side is included, that is, a technique called decoder-side motion vector refinement (DMVR) has been known (see, for example, Non Patent Literature 1).

### CITATION LIST

### NON PATENT LITERATURE

Non Patent Literature 1: Versatile Video Coding (Draft 5), JVET-N 1001

### SUMMARY OF INVENTION

### TECHNICAL PROBLEM

However, for example, in the technique disclosed in Non Patent Literature 1, since the refinement processing is always executed on the block satisfying the above-described application condition, there is a problem that the refinement processing is executed even on a block having a low correlation in a time direction, and coding efficiency may be rather lowered.

Therefore, the present invention has been made in view of the above-described problems, and an object of the present invention is to provide an image decoding device, an image decoding method, and a program capable of preventing a decrease in coding efficiency by not executing refinement processing on a block having a low correlation in a time direction.

### SOLUTION TO PROBLEM

The first aspect of the present invention is summarized as an image decoding device including: a motion vector decoding unit configured to decode a motion vector from coded data; and a refinement unit configured to search for the motion vector with a value of the motion vector decoded by the motion vector decoding unit as an initial value, and determine the decoded motion vector as a final motion vector in a case where a searching cost at an initial searched point is larger than a predetermined threshold value or in a case where the searching cost at the initial searched point is equal to or larger than the threshold value.

The second aspect of the present invention is summarized as an image decoding device including: a motion vector decoding unit configured to decode a motion vector from coded data; and a refinement unit configured to search for the motion vector with a value of the motion vector decoded by the motion vector decoding unit as an initial value, and determine the decoded motion vector as a final motion vector in a case where a minimum searching cost among searched points is larger than a predetermined threshold value or in a case where the minimum searching cost among searched points is equal to or larger than the threshold value.

The third aspect of the present invention is summarized as an image decoding device including: a motion vector decoding unit configured to decode a motion vector from coded data; and a refinement unit configured to search for the motion vector with a value of the motion vector decoded by the motion vector decoding unit as an initial value, and determine the decoded motion vector as a final motion vector in a case where a difference value between a searching cost at an initial position and a minimum searching cost among searched points is smaller than a predetermined threshold value or in a case where the difference value is equal to or smaller than the threshold value.

The fourth aspect of the present invention is summarized as an image decoding device including: a motion vector decoding unit configured to decode a motion vector from coded data; a refinement unit configured to search for the motion vector with a value of the motion vector decoded by the motion vector decoding unit as an initial value; and a prediction signal generation unit configured to generate a prediction signal based on the motion vector outputted from the refinement unit, wherein the prediction signal generation unit is configured to determine not to execute a BDOF (Bi-Directional Optical Flow) processing in a case where an index value showing similarity between a block on a first reference frame side and a block on a second reference frame side is larger than a predetermined threshold value or in a case where the index value is equal to or larger than the threshold value.

The fifth aspect of the present invention is summarized as an image decoding device including: a motion vector decoding unit configured to decode a motion vector from coded data; and a refinement unit configured to search for the motion vector with a value of the motion vector decoded by the motion vector decoding unit as an initial value, wherein the refinement unit is configured to include, in a searching cost, a norm of a difference vector between an initial position and a searched point.

The sixth aspect of the present invention is summarized as an image decoding method including of the steps of: decoding a motion vector from coded data; searching for the motion vector with a value of the motion vector decoded by the motion vector decoding unit as an initial value, and determining the decoded motion vector as a final motion vector in a case where a searching cost at an initial searched point is larger than a predetermined threshold value or in a case where the searching cost at the initial searched point is equal to or larger than the threshold value.

The seventh aspect of the present invention is summarized as a program used in an image decoding device, the program causing a computer to execute the steps of: decoding a motion vector from coded data; searching for the motion vector with a value of the motion vector decoded by the motion vector decoding unit as an initial value, and determining the decoded motion vector as a final motion vector in a case where a searching cost at an initial searched point is larger than a predetermined threshold value or in a case where the searching cost at the initial searched point is equal to or larger than the threshold value.

### ADVANTAGEOUS EFFECTS OF INVENTION

According to the present invention, it is possible to provide an image decoding device, an image decoding method, and a program capable of preventing a decrease in coding efficiency by not executing refinement processing on a block having a low correlation in a time direction.

### BRIEF DESCRIPTION OF DRAWINGS

Fig. 1 is a diagram illustrating an example of a configuration of an image processing system 10 according to an embodiment.
Fig. 2 is a diagram illustrating an example of functional blocks of an image coding device 100 according to the embodiment.
Fig. 3 is a diagram illustrating an example of functional blocks of an inter-prediction unit 111 of the image coding device 100 according to the embodiment.
Fig. 4 is a flowchart illustrating an example of a processing procedure of a refinement unit 111C of the inter-prediction unit 111 of the image coding device 100 according to the embodiment.
Fig. 5 is a flowchart illustrating an example of a processing procedure of a prediction signal generation unit 111D of an inter-prediction unit 111 of an image decoding device 200 according to the embodiment.
Fig. 6 is a diagram illustrating an example of functional blocks of an image decoding device 200 according to the embodiment.
Fig. 7 is a diagram illustrating an example of functional blocks of an inter-prediction unit 241 of the image decoding device 200 according to the embodiment.

### DESCRIPTION OF EMBODIMENTS

An embodiment of the present invention will be described hereinbelow with reference to the drawings. Note that the constituent elements of the embodiment below can, where appropriate, be substituted with existing constituent elements and the like, and that a wide range of variations, including combinations with other existing constituent elements, is possible. Therefore, there are no limitations placed on the content of the invention as in the claims on the basis of the disclosures of the embodiment hereinbelow.

### (First Embodiment)

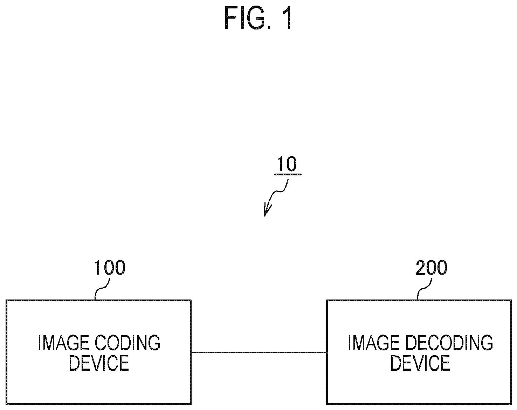

Hereinafter, an image processing system 10 according to a first embodiment of the present invention will be described with reference to Figs. 1 to 7. Fig. 1 is a diagram illustrating the image processing system 10 according to the present embodiment.

As illustrated in Fig. 1, the image processing system 10 includes an image coding device 100 and an image decoding device 200.

The image coding device 100 is configured to generate coded data by coding an input image signal. The image decoding device 200 is configured to generate an output image signal by decoding the coded data.

Here, such coded data may be transmitted from the image coding device 100 to the image decoding device 200 via a transmission path. Furthermore, the coded data may be stored in a storage medium and then provided from the image coding device 100 to the image decoding device 200.

### (Image Coding Device 100)

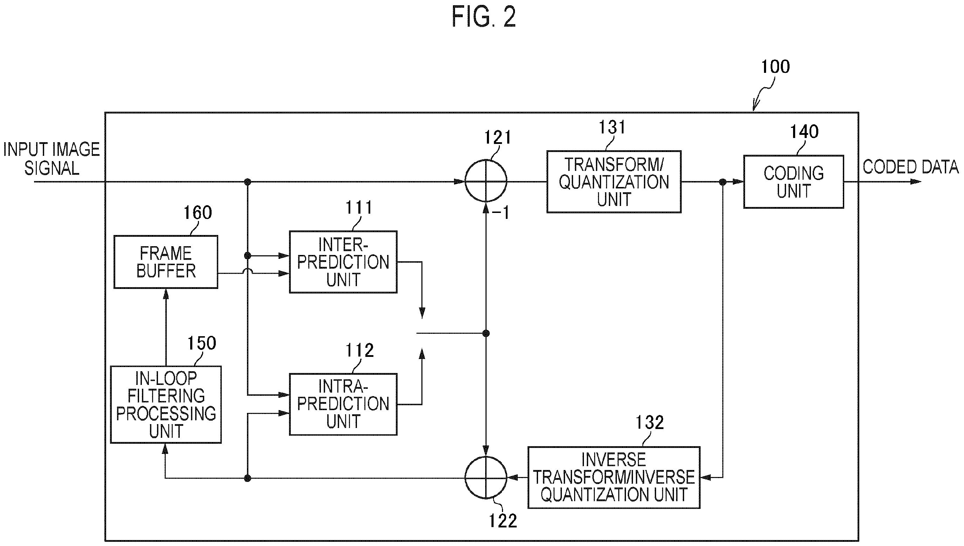

Hereinafter, the image coding device 100 according to the present embodiment will be described with reference to Fig. 2. Fig. 2 is a diagram illustrating an example of functional blocks of the image coding device 100 according to the present embodiment.

As illustrated in Fig. 2, the image coding device 100 includes an inter-prediction unit 111, an intra prediction unit 112, a subtractor 121, an adder 122, a transform/quantization unit 131, an inverse transform/inverse quantization unit 132, a coding unit 140, an in-loop filtering processing unit 150, and a frame buffer 160.

The inter-prediction unit 111 is configured to generate a prediction signal by inter-prediction (inter-frame prediction).

Specifically, the inter-prediction unit 111 is configured to specify a reference block included in a reference frame by comparing a frame to be coded (hereinafter, referred to as a target frame) with the reference frame stored in the frame buffer 160, and determine a motion vector for the specified reference block.

The inter-prediction unit 111 is configured to generate the prediction signal included in a prediction block for each prediction block based on the reference block and the motion vector. The inter-prediction unit 111 is configured to output the prediction signal to the subtractor 121 and the adder 122. Here, the reference frame is a frame different from the target frame.

The intra prediction unit 112 is configured to generate a prediction signal by intra prediction (intra-frame prediction).

Specifically, the intra prediction unit 112 is configured to specify the reference block included in the target frame, and generate the prediction signal for each prediction block based on the specified reference block. Furthermore, the intra prediction unit 112 is configured to output the prediction signal to the subtractor 121 and the adder 122.

Here, the reference block is a block referred to for a prediction target block (hereinafter, referred to as the target block). For example, the reference block is a block adjacent to the target block.

The subtractor 121 is configured to subtract the prediction signal from the input image signal, and output a prediction residual signal to the transform/quantization unit 131. Here, the subtractor 121 is configured to generate the prediction residual signal that is a difference between the prediction signal generated by intra prediction or inter-prediction and the input image signal.

The adder 122 is configured to add the prediction signal to the prediction residual signal output from the inverse transform/inverse quantization unit 132 to generate a pre-filtering decoded signal, and output the pre-filtering decoded signal to the intra prediction unit 112 and the in-loop filtering processing unit 150.

Here, the pre-filtering decoded signal constitutes the reference block used by the intra prediction unit 112.

The transform/quantization unit 131 is configured to perform transform processing for the prediction residual signal and acquire a coefficient level value. Furthermore, the transform/quantization unit 131 may be configured to perform quantization of the coefficient level value.

Here, the transform processing is processing of transforming the prediction residual signal into a frequency component signal. In such transform processing, a base pattern (transformation matrix) corresponding to discrete cosine transform (DCT) may be used, or a base pattern (transformation matrix) corresponding to discrete sine transform (DST) may be used.

The inverse transform/inverse quantization unit 132 is configured to perform inverse transform processing for the coefficient level value output from the transform/quantization unit 131. Here, the inverse transform/inverse quantization unit 132 may be configured to perform inverse quantization of the coefficient level value prior to the inverse transform processing.

Here, the inverse transform processing and the inverse quantization are performed in a reverse procedure to the transform processing and the quantization performed by the transform/quantization unit 131.

The coding unit 140 is configured to code the coefficient level value output from the transform/quantization unit 131 and output coded data.

Here, for example, the coding is entropy coding in which codes of different lengths are assigned based on a probability of occurrence of the coefficient level value.

Furthermore, the coding unit 140 is configured to code control data used in decoding processing in addition to the coefficient level value.

Here, the control data may include size data such as a coding block (coding unit (CU)) size, a prediction block (prediction unit (PU)) size, and a transform block (transform unit (TU)) size.

The in-loop filtering processing unit 150 is configured to execute filtering processing on the pre-filtering decoded signal output from the adder 122 and output the filtered decoded signal to the frame buffer 160.

Here, for example, the filtering processing is deblocking filtering processing for reducing distortion occurring at a boundary portion of a block (coding block, prediction block, or transform block).

The frame buffer 160 is configured to accumulate the reference frames used by the inter-prediction unit 111.

Here, the filtered decoded signal constitutes the reference frame used by the inter-prediction unit 111.

### (Inter-prediction Unit 111)

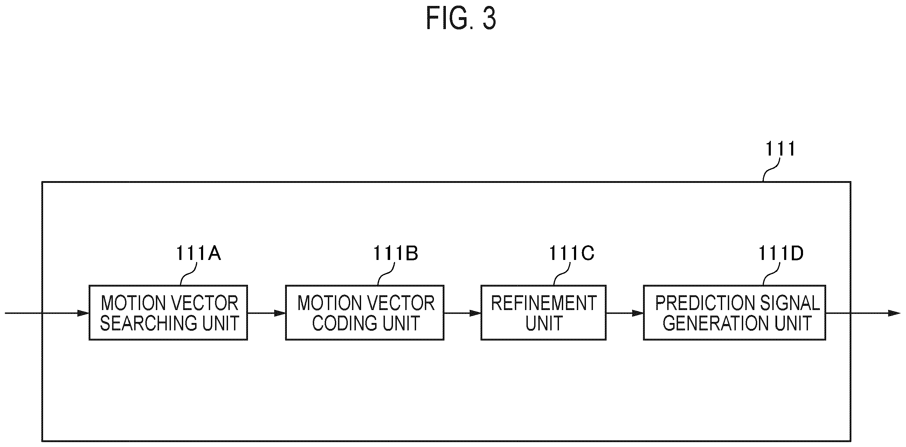

Hereinafter, the inter-prediction unit 111 of the image coding device 100 according to the present embodiment will be described with reference to Fig. 3. Fig. 3 is a diagram illustrating an example of functional blocks of the inter-prediction unit 111 of the image coding device 100 according to the present embodiment.

As illustrated in Fig. 3, the inter-prediction unit 111 includes a motion vector searching unit 111A, a motion vector coding unit 111B, a refinement unit 111C, and a prediction signal generation unit 111D.

The inter-prediction unit 111 is an example of a prediction unit configured to generate the prediction signal included in the prediction block based on the motion vector.

The motion vector searching unit 111A is configured to specify the reference block included in the reference frame by comparing the target frame with the reference frame, and search for the motion vector for the specified reference block.

In addition, the above-described searching is performed on a plurality of reference frame candidates, and the reference frame and the motion vector used for prediction in the prediction block are determined. A maximum of two reference frames and two motion vectors can be used for one block. A case where only one set of the reference frame and the motion vector is used for one block is referred to as uni-prediction, and a case where two sets of the reference frame and the motion vector are used is referred to as bi-prediction. Hereinafter, the first set is referred to as L0, and the second set is referred to as L1.

Furthermore, the motion vector searching unit 111A is configured to determine a coding method for the reference frame and the motion vector. The coding method includes, in addition to a normal method of transmitting information regarding the reference frame and information regarding the motion vector, a merge mode to be described later.

Note that, since a known method can be adopted as a method of determining the method of searching for the motion vector, the method of determining the reference frame, and the coding method for the reference frame and the motion vector, the details thereof will be omitted.

The motion vector coding unit 111B is configured to code the information regarding the reference frame and the motion vector determined by the motion vector searching unit 111A by using the coding method also determined by the motion vector searching unit 111A.

In a case where the coding method for the block is the merge mode, a merge list for the block is first created on the image coding device 100 side. Here, the merge list is a list in which a plurality of combinations of the reference frames and the motion vectors are listed.

An index is assigned to each combination, and the image coding device 100 codes only the index instead of individually coding the information regarding the reference frame and the motion vector, and transmits the index to the image decoding device 200. A merge list creation method is commonized between the image coding device 100 side and the image decoding device 200 side, such that the image decoding device 200 side can decode the information regarding the reference frame and the motion vector only from the information related to the index.

Note that, since a known method can be adopted as the merge list creation method, the details thereof will be omitted.

As for coding of the information regarding the motion vector, first, a predicted motion vector that is a predicted value of the motion vector to be coded is generated, and a difference motion vector that is a difference value between the predicted motion vector and a motion vector to be actually coded is coded.

The refinement unit 111C is configured to execute refinement processing (for example, decoder-side motion vector refinement (DMVR)) of correcting the motion vector coded by the motion vector coding unit 111B.

Specifically, the refinement unit 111C is configured to execute refinement processing of setting a search range with reference to a reference position specified by the motion vector coded by the motion vector coding unit 111B, specifying a correction reference position having the lowest predetermined cost from the search range, and correcting the motion vector based on the correction reference position.

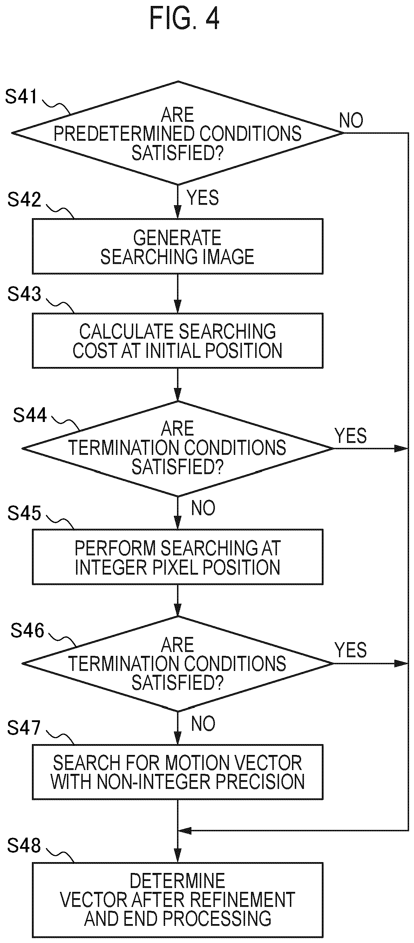

Fig. 4 is a flowchart illustrating an example of a processing procedure of the refinement unit 111C.

As illustrated in Fig. 4, in Step S41, the refinement unit 111C determines whether or not predetermined conditions for applying the refinement processing are satisfied. In a case where all the predetermined conditions are satisfied, the processing procedure proceeds to Step S42. On the other hand, in a case where any one of the predetermined conditions is not satisfied, the processing procedure proceeds to Step S48 and ends the refinement processing.

Here, the predetermined conditions include a condition that the block is a block that performs bi-prediction. Further, the predetermined conditions may include a condition that the motion vector is coded in the merge mode.

In Step S42, the refinement unit 111C generates a search image based on the information regarding the motion vector coded by the motion vector coding unit 111B and the reference frame.

Here, in a case where the motion vector indicates a non-integer pixel position, the refinement unit 111C applies a filter to the pixel value of the reference frame to interpolate a pixel at the non-integer pixel position. At this time, the refinement unit 111C can reduce a computation amount by using an interpolation filter having a smaller number of taps than an interpolation filter used in the prediction signal generation unit 111D to be described later. For example, the refinement unit 111C can interpolate the pixel value at the non-integer pixel position by bilinear interpolation.

In Step S43, the refinement unit 111C calculates a searching cost at an initial position by using the search image generated in Step S42.

Here, the initial position is a position indicated by the motion vector coded by the motion vector coding unit 111B. Furthermore, the searching cost is an index value of similarity between the reference block on the L0 side (first reference frame side) and the reference block on the L1 side (second reference frame side) indicated by the motion vector described above, and for example, the sum of absolute errors or the sum of squared errors between pixel values can be used.

In Step S44, the refinement unit 111C uses the searching cost at the initial position calculated in Step S43 as an input, and determines whether or not termination conditions for stopping the refinement processing of the block are satisfied. In a case where all the termination conditions are satisfied, the processing procedure proceeds to Step S45. On the other hand, in a case where any one of the termination conditions is not satisfied, the processing procedure proceeds to Step S48 and ends the refinement processing.

Here, the termination conditions (stop conditions) in Step S44 can include, for example, a condition that the searching cost at the initial position described above is smaller than a predetermined first threshold value (alternatively, the searching cost at the initial position described above is equal to or less than the predetermined first threshold value). Further, the termination conditions (stop conditions) in Step S44 can include, for example, a condition that the searching cost at the initial position described above is larger than a predetermined second threshold value (alternatively, the searching cost at the initial position described above is equal to or more than the predetermined first threshold value).

In Step S45, the refinement unit 111C performs searching with an integer pixel precision by using the search image generated in Step S42.

Here, the integer pixel precision means that only points corresponding to integer pixel intervals are searched for with reference to the motion vector coded by the motion vector coding unit 111B.

The refinement unit 111C determines the corrected motion vector at an integer pixel interval position by the searching in Step S45. Here, a known method can be used as a method for the searching.

For example, the refinement unit 111C can search for only points corresponding to a combination obtained by inverting only signs of the difference motion vectors on the L0 side and the L1 side.

Here, the searched point having the lowest searching cost at each searching position corresponds to the corrected motion vector at the integer pixel interval position. As described above, an index such as the sum of absolute differences or the sum of squared errors can be used as the searching cost. At this time, the refinement unit 111C may set, as the searching cost, an index obtained by adding an Lp norm of a difference vector between the corrected motion vector and the motion vector at the initial position to the index for evaluating the similarity between the blocks such as the sum of absolute differences described above.

Specifically, the refinement unit 111C may use, for example, the sum of the sum of absolute differences and the L1 norm of the difference vector as the searching cost. Furthermore, when adding the L1 norm to the sum of absolute differences, the refinement unit 111C may add the L1 norm after weighting with a predetermined ratio. For example, the refinement unit 111C may add a value obtained by multiplying the L1 norm by 2 to the sum of absolute differences. At this time, in a case where the magnification is a power of 2, equivalent processing can be implemented by bit shifting. Note that there is a possibility that the motion vector has the same value as the motion vector before the searching as a result of the searching in Step S45.

In Step S46, the refinement unit 111C uses the searching cost corresponding to the corrected motion vector at the integer pixel interval position determined in Step S45 to determine whether or not the termination conditions for stopping the refinement processing in the block are satisfied. In a case where all the termination conditions are satisfied, the processing procedure proceeds to Step S47. On the other hand, in a case where any one of the termination conditions is not satisfied, the processing procedure proceeds to Step S48 and ends the refinement processing.

Here, the termination conditions (stop conditions) in Step S46 can include, for example, a condition that the searching cost described above is larger than a predetermined third threshold value (alternatively, the searching cost described above is equal to or more than the predetermined third threshold value). At this time, the third threshold value may be set to the same value as the second threshold value described above.

Furthermore, in a case where the refinement unit 111C determines that such termination conditions are satisfied, the refinement unit 111C may discard the search result in Step S45 and set, as the final motion vector of the block, the same motion vector (that is, the motion vector coded by the motion vector coding unit 111B) as in a case where the refinement processing is not executed.

The termination conditions (stop conditions) in Step S46 may include, for example, a condition that a difference value between the searching cost at the initial position calculated in Step S43 and the searching cost corresponding to the corrected motion vector calculated in Step S45 is smaller than a predetermined fourth threshold value (alternatively, the difference value described above is equal to or smaller than the predetermined fourth threshold value). At this time, the fourth threshold value may be set to the same value as the first threshold value.

Furthermore, in a case where the refinement unit 111C determines that such termination conditions are satisfied, the refinement unit 111C may discard the search result in Step S45 and set, as the final motion vector of the block, the same motion vector as in a case where the refinement processing is not executed.

In Step S47, the refinement unit 111C searches for the motion vector with a non-integer pixel precision by using, as an initial value, the corrected motion vector with the integer pixel precision determined in Step S43. Here, a known method can be used as a method of searching for the motion vector.

Furthermore, the refinement unit 111C can determine the motion vector with the non-integer pixel precision by using a parametric model such as parabolic fitting with the result of Step S43 as an input without actually performing the searching.

In Step S47, the refinement unit 111C determines the corrected motion vector with the non-integer pixel precision, and then proceeds to Step S48 to end the refinement processing. Here, the expression "corrected motion vector with the non-integer pixel precision" is used for convenience, but there is a possibility that the value resultantly becomes the same as the motion vector with the integer pixel precision obtained in Step S45 according to the search result in Step S47.

Although Step S43 and Step S45 have been described above as separate steps for convenience, both processings may be executed in the same step. For example, the processing procedure proceeds to Step S45 immediately after Step S42, and the refinement unit 111C can calculate both the searching cost at the initial position and the searching cost corresponding to the corrected motion vector at the pixel interval position in Step S45. Thereafter, the processing procedure proceeds to Step S46, and the refinement unit 111C can determine whether or not the termination conditions are satisfied in consideration of at least one of the condition described as Step S44 and the condition described as Step S46.

Furthermore, for example, in Step S48, the refinement unit 111C can determine whether or not to discard the search result by using the searching cost at the initial position and the searching cost corresponding to the corrected motion vector at the pixel interval position.

For example, in a case where the searching cost at the initial position is larger than the second threshold value (alternatively, in a case where the searching cost at the initial position is equal to or more than the second threshold value), the refinement unit 111C discards the search result and may use, as the final motion vector of the block, the same motion vector (that is, the motion vector coded by the motion vector coding unit 111B) as in a case where the refinement processing is not executed.

Furthermore, for example, in a case where the searching cost corresponding to the corrected motion vector at the integer pixel interval position is larger than the third threshold value (alternatively, in a case where the searching cost corresponding to the corrected motion vector at the integer pixel interval position is equal to or more than the third threshold value), the refinement unit 111C may discard the search result and use, as the final motion vector of the block, the same motion vector as in a case where the refinement processing is not executed.

Furthermore, for example, in a case where the difference value between the searching cost at the initial position and the searching cost corresponding to the corrected motion vector at the integer pixel interval position is smaller than the fourth threshold value (alternatively, in a case where the difference value is equal to or smaller than the fourth threshold value), the refinement unit 111C may discard the search result and use, as the final motion vector of the block, the same motion vector as in a case where the refinement processing is not executed.

Although the configuration including all of Steps S41 to S48 has been described above, Steps S44 and S46 are not necessarily included in the configuration.

The refinement unit 111C may divide a block larger than a predetermined threshold value into small sub-blocks and execute the refinement processing for each sub-block. For example, the refinement unit 111C sets 16 × 16 pixels as the unit of execution of the refinement processing, and in a case where the size of the block in the horizontal direction or the vertical direction is larger than 16 pixels, the block can be divided so as to be 16 pixels or less. At this time, as the motion vector serving as a reference for the refinement processing, the motion vector of the block coded by the motion vector coding unit 111B is used for all the sub-blocks in the same block.

In a case where the processing is executed for each sub-block, the refinement unit 111C may perform all the procedures in Fig. 4 for each sub-block. Furthermore, the refinement unit 111C may process only a part of the processing of Fig. 4 for each sub-block. Specifically, the refinement unit 111C may execute processing for each block in Steps S41 and S42 of Fig. 4, and may execute processing for each sub-block in Steps S43 to S48.

The prediction signal generation unit 111D is configured to generate the prediction signal based on the corrected motion vector output from the refinement unit 111C.

Here, as will be described later, the prediction signal generation unit 111D is configured to determine whether or not bi-directional optical flow (BDOF) processing can be executed for each block based on information (for example, the searching cost) calculated in the course of the above-described refinement processing.

Specifically, the prediction signal generation unit 111D is configured to generate the prediction signal based on the motion vector coded by the motion vector coding unit 111B in a case where the motion vector is not corrected. On the other hand, the prediction signal generation unit 111D is configured to generate the prediction signal based on the motion vector corrected by the refinement unit 111C in a case where the motion vector is corrected.

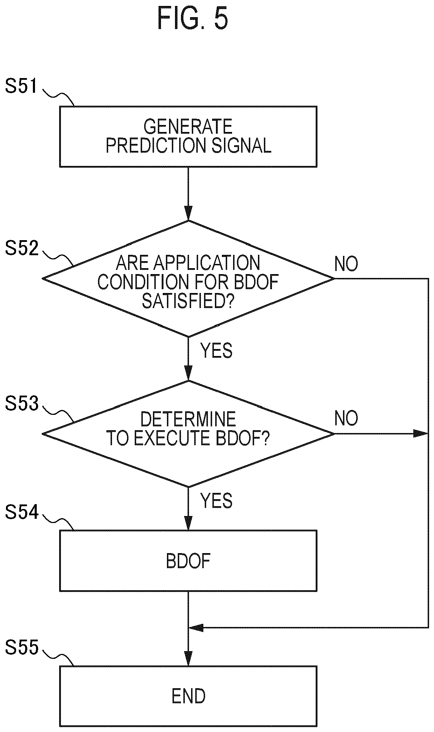

Fig. 5 is a flowchart illustrating an example of a processing procedure of the prediction signal generation unit 111D. Here, in a case where the refinement unit 111C executes the refinement processing in units of sub-blocks, the processing of the prediction signal generation unit 111D is also executed in units of sub-blocks. In this case, the term "block" in the following description can be appropriately replaced with the term "sub-block".

Furthermore, in a case where the block size of the block that is not subjected to the refinement processing by the refinement unit 111C is larger than a predetermined threshold value, the block may be divided into smaller sub-blocks and the refinement processing may be executed for each sub-block. For example, similarly to the refinement unit 111C, it is possible to set 16 × 16 pixels as the unit of execution of the prediction signal generation processing, and in a case where the size of the block in the horizontal direction or the vertical direction is larger than 16 pixels, the block can be divided so as to be 16 pixels or less. Also in this case, the term "block" in the following description can be appropriately replaced with the term "sub-block".

As illustrated in Fig. 5, in Step S51, the prediction signal generation unit 111D generates the prediction signal.

Specifically, the prediction signal generation unit 111D uses, as an input, the motion vector coded by the motion vector coding unit 111B or the motion vector coded by the refinement unit 111C, and in a case where the position indicated by such a motion vector is the non-integer pixel position, the prediction signal generation unit 111D interpolates a pixel at the non-integer pixel position by applying a filter to the pixel value of the reference frame. Here, as a specific filter, a horizontal/vertical separable filter having up to eight taps disclosed in Non Patent Literature 1 can be applied.

In a case where the block is a block that performs bi-prediction, the prediction signal generation unit 111D generates both the prediction signal based on the first (hereinafter, referred to as L0) reference frame and motion vector and the prediction signal based on the second (hereinafter, referred to as L1) reference frame and motion vector.

In Step S52, the prediction signal generation unit 111D checks whether or not an application condition for the BDOF processing to be described later is satisfied.

As such application conditions, the conditions described in Non Patent Literature 1 can be applied. The application conditions include at least a condition that the block is a block that performs bi-prediction. Furthermore, the application conditions may include a condition that the motion vector of the block is not coded in a symmetric MVD mode as described in Non Patent Literature 1.

In a case where the application conditions are not satisfied, the processing procedure proceeds to Step S55 and ends the processing. At this time, the prediction signal generation unit 111D outputs the prediction signal generated in Step S51 as a final prediction signal.

On the other hand, in a case where all the application conditions are satisfied, the processing procedure proceeds to Step S53. In Step S53, the processing procedure determines whether or not to actually execute the BDOF processing in Step S54 for the block satisfying the application conditions.

Hereinafter, a case where the sum of absolute differences is used as the searching cost will be described as an example, but other indexes can also be used as the searching cost. For example, an index value for determining similarity between image signals, such as the sum of absolute differences or the sum of squared errors between signals after removal of a local average value, can be used as the searching cost.

For example, the prediction signal generation unit 111D calculates the sum of absolute differences between the prediction signal of L0 and the prediction signal of L1, and determines not to execute the BDOF processing in a case where the calculated value is smaller than a predetermined threshold value (alternatively, in a case where the calculated value is equal to or less than the predetermined threshold value).

Furthermore, for example, the prediction signal generation unit 111D can calculate the sum of absolute differences between the prediction signal of L0 and the prediction signal of L1, and determines not to execute the BDOF processing in a case where the calculated value is larger than a predetermined threshold value (alternatively, in a case where the calculated value is equal to or more than the predetermined threshold value).

Here, the prediction signal generation unit 111D can also use the result of the refinement processing for the block on which the refinement processing has been executed by the refinement unit 111C to determine whether or not to apply the BDOF processing.

The prediction signal generation unit 111D can also determine whether or not to apply the BDOF processing by using the searching cost (for example, the sum of absolute differences between the pixel value of the reference block on the L0 side and the pixel value of the reference block on the L1 side) calculated in the course of the above-described refinement processing.

For example, the prediction signal generation unit 111D can determine not to apply the BDOF processing in a case where the sum of absolute differences of the searched point having the lowest searching cost (the sum of absolute differences) is smaller than a predetermined fifth threshold value (alternatively, in a case where the sum of absolute differences is equal to or less than the predetermined fifth threshold value) in the searching with the integer pixel precision in Step S45. At this time, the fifth threshold value may be set to the same value as the first threshold value.

For example, the prediction signal generation unit 111D can determine not to apply the BDOF processing in a case where the sum of absolute differences of the searched point having the lowest searching cost (the sum of absolute differences) is larger than a predetermined sixth threshold value (alternatively, in a case where the sum of absolute differences is equal to or more than the predetermined sixth threshold value) in the searching with the integer pixel precision in Step S45. At this time, the sixth threshold value may be set to the same value as the second threshold value or the third threshold value.

For example, the prediction signal generation unit 111D can determine not to apply the BDOF processing in a case where the searching cost at the initial position calculated in Step S43 is smaller than the predetermined fifth threshold value (alternatively, in a case where the searching cost at the initial position is equal to or less than the predetermined fifth threshold value). At this time, the fifth threshold value may be set to the same value as the first threshold value.

For example, the prediction signal generation unit 111D can determine not to apply the BDOF processing in a case where the searching cost at the initial position calculated in Step S43 is larger than the predetermined sixth threshold value (alternatively, in a case where the searching cost at the initial position is equal to or more than the predetermined sixth threshold value). At this time, the sixth threshold value may be set to the same value as the second threshold value or the third threshold value.

For example, the prediction signal generation unit 111D can determine not to apply the BDOF processing in a case where a difference value between the searching cost at the initial position calculated in Step S43 and the minimum searching cost in the searching with the integer pixel precision in Step S45 is smaller than a predetermined seventh threshold value (alternatively, in a case where the difference value is equal to or smaller than the predetermined seventh threshold value). At this time, the seventh threshold value may be set to the same value as the first threshold value or the fourth threshold value.

Furthermore, the prediction signal generation unit 111D may make the determination by a method based on a result of the refinement processing for the block on which the refinement processing has been executed, and by a method based on the sum of absolute differences for the other blocks.

Furthermore, as described above, the prediction signal generation unit 111D can be configured to determine whether or not to apply the BDOF processing by using only the information obtained from the result of the refinement processing without newly executing the processing of calculating the sum of absolute differences between the prediction signal on the L0 side and the prediction signal on the L1 side. In this case, in Step S53, the prediction signal generation unit 111D determines to always apply the BDOF processing to the block on which the refinement processing is not executed.

With such a configuration, in this case, it is not necessary to execute the processing of calculating the sum of absolute differences by the prediction signal generation unit 111D, and thus, it is possible to reduce a processing amount and a processing delay from the viewpoint of hardware implementation.

Furthermore, with such a configuration, from the viewpoint of software implementation, the BDOF processing is not executed for the block in which the effect of the BDOF processing is estimated to be low by using the result of the refinement processing, whereby a processing time for the entire image can be shortened while maintaining the coding efficiency.

Furthermore, the determination processing itself using the result of the refinement processing described above is executed inside the refinement unit 111C, and information indicating the result is transmitted to the prediction signal generation unit 111D, such that the prediction signal generation unit 111D can determine whether or not to apply the BDOF processing.

For example, as described above, the values of the motion vector and the searching cost before and after the refinement processing are determined, and a flag is prepared so as to be "1" in a case where a condition for not applying the BDOF processing is satisfied, and to be "0" in a case where the condition for not applying the BDOF processing is not satisfied and in a case where the refinement processing is not applied, and the prediction signal generation unit 111D can determine whether or not to apply the BDOF processing with reference to the value of the flag.

Furthermore, here, for convenience, Step S52 and Step S53 have been described as different steps, but the determination in Step S52 and the determination in Step S53 can be performed simultaneously.

In the determination as described above, for a block for which the prediction signal generation unit 111D determines not to apply the BDOF processing, the processing procedure proceeds to Step S55. For the other blocks, the processing procedure proceeds to Step S54.

In Step S54, the prediction signal generation unit 111D executes the BDOF processing. Since a known method can be used for the BDOF processing itself, a detailed description thereof will be omitted. After the BDOF processing is executed, the processing procedure proceeds to Step S55 and ends the processing.

The first to seventh threshold values may be defined so as to change a value according to the block size (a product of a height and a width of a block) or the number of pixels used for calculation of the searching cost such as an SAD in the block.

Each of the first to seventh threshold values may be defined so as to change a value according to a quantization parameter (QP) of the block. For example, in a case where the cost value tends to increase when the quantization parameter is large, the threshold value can be defined to increase as the quantization parameter increases.

### (Image Decoding Device 200)

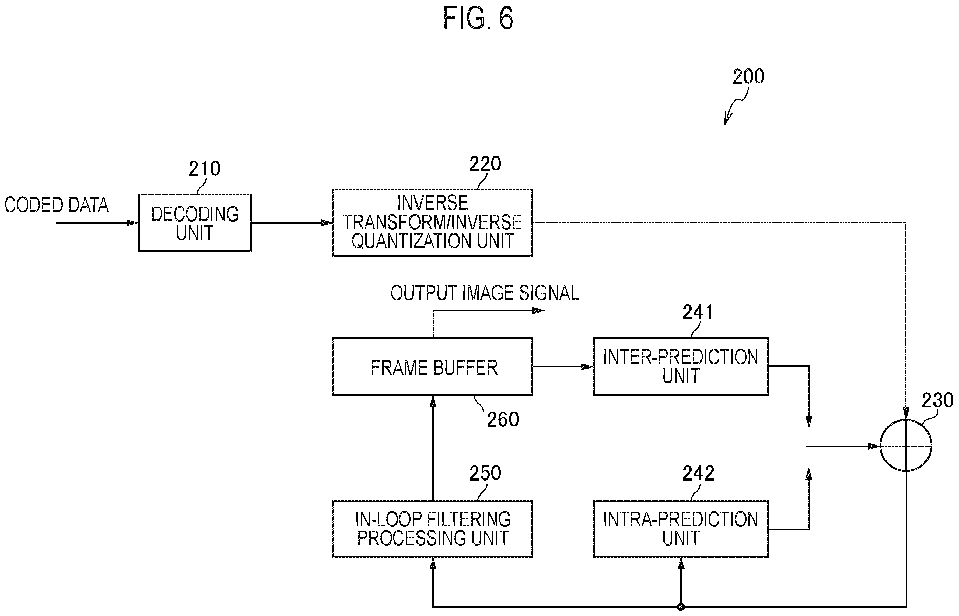

Hereinafter, the image decoding device 200 according to the present embodiment will be described with reference to Fig. 6. Fig. 6 is a diagram illustrating an example of functional blocks of the image decoding device 200 according to the present embodiment.

As illustrated in Fig. 6, the image decoding device 200 includes a decoding unit 210, an inverse transform/inverse quantization unit 220, an adder 230, an inter-prediction unit 241, an intra prediction unit 242, an in-loop filtering processing unit 250, and a frame buffer 260.

The decoding unit 210 is configured to decode the coded data generated by the image coding device 100 and decode the coefficient level value.

Here, for example, the decoding is entropy decoding performed in a reverse procedure to the entropy coding performed by the coding unit 140.

Furthermore, the decoding unit 210 may be configured to acquire control data by decoding processing for the coded data.

Note that, as described above, the control data may include size data such as a coding block size, a prediction block size, and a transform block size.

The inverse transform/inverse quantization unit 220 is configured to perform inverse transform processing for the coefficient level value output from the decoding unit 210. Here, the inverse transform/inverse quantization unit 220 may be configured to perform inverse quantization of the coefficient level value prior to the inverse transform processing.

Here, the inverse transform processing and the inverse quantization are performed in a reverse procedure to the transform processing and the quantization performed by the transform/quantization unit 131.

The adder 230 is configured to add the prediction signal to the prediction residual signal output from the inverse transform/inverse quantization unit 220 to generate a pre-filtering decoded signal, and output the pre-filtering decoded signal to the intra prediction unit 242 and the in-loop filtering processing unit 250.

Here, the pre-filtering decoded signal constitutes a reference block used by the intra prediction unit 242.

Similarly to the inter-prediction unit 111, the inter-prediction unit 241 is configured to generate a prediction signal by inter-prediction (inter-frame prediction).

Specifically, the inter-prediction unit 241 is configured to generate the prediction signal for each prediction block based on the motion vector decoded from the coded data and the reference signal included in the reference frame. The inter-prediction unit 241 is configured to output the prediction signal to the adder 230.

Similarly to the intra prediction unit 112, the intra prediction unit 242 is configured to generate a prediction signal by intra prediction (intra-frame prediction).

Specifically, the intra prediction unit 242 is configured to specify the reference block included in the target frame, and generate the prediction signal for each prediction block based on the specified reference block. The intra prediction unit 242 is configured to output the prediction signal to the adder 230.

Similarly to the in-loop filtering processing unit 150, the in-loop filtering processing unit 250 is configured to execute filtering processing on the pre-filtering decoded signal output from the adder 230 and output the filtered decoded signal to the frame buffer 260.

Here, for example, the filtering processing is deblocking filtering processing for reducing distortion occurring at a boundary portion of a block (the coding block, the prediction block, the transform block, or a sub-block obtained by dividing them).

Similarly to the frame buffer 160, the frame buffer 260 is configured to accumulate the reference frames used by the inter-prediction unit 241.

Here, the filtered decoded signal constitutes the reference frame used by the inter-prediction unit 241.

### (Inter-prediction Unit 241)

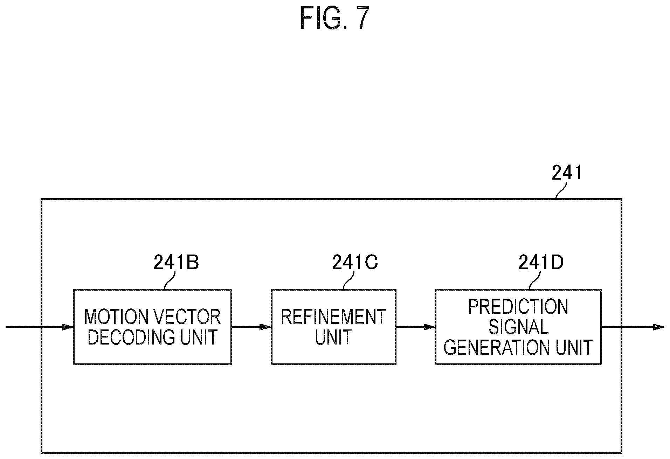

Hereinafter, the inter-prediction unit 241 according to the present embodiment will be described with reference to Fig. 7. Fig. 7 is a diagram illustrating an example of functional blocks of the inter-prediction unit 241 according to the present embodiment.

As illustrated in Fig. 7, the inter-prediction unit 241 includes a motion vector decoding unit 241B, a refinement unit 241C, and a prediction signal generation unit 241D.

The inter-prediction unit 241 is an example of a prediction unit configured to generate the prediction signal included in the prediction block based on the motion vector.

The motion vector decoding unit 241B is configured to acquire the motion vector by decoding the control data received from the image coding device 100.

The refinement unit 241C is configured to execute the refinement processing of correcting the motion vector, similarly to the refinement unit 111C.

The prediction signal generation unit 241D is configured to generate the prediction signal based on the motion vector, similarly to the prediction signal generation unit 111D.

In the image coding device 100 and the image decoding device 200 according to the present embodiment, the refinement units 111C and 241C can be configured to discard the search result in a case where the searching cost is larger than a predetermined threshold value (alternatively, in a case where the searching cost is equal to or more than the predetermined threshold value). Here, the refinement processing can improve the coding efficiency in a case where a correlation of the pixel values among the block, the reference block on the L0 side, and the reference block on the L1 side is high. With the above-described configuration, it is possible to prevent the refinement processing from being executed for the block having a low correlation in the time direction without transmitting additional information (information regarding whether or not to apply the refinement processing) from the image coding device 100 side, and it is possible to prevent a decrease in coding efficiency.

In the image coding device 100 and the image decoding device 200 according to the present embodiment, the refinement units 111C and 241C can be configured to discard the search result in a case where a difference value between the searching cost at the initial position and the searching cost corresponding to the point after the searching is smaller than a predetermined threshold value (alternatively, in a case where the difference value is equal to or smaller than the predetermined threshold value). As a result, it is possible to avoid unnecessary correction of the motion vector at a point where the searching cost slightly lower than that at the initial position is accidentally obtained due to the influence of noise or the like, and it is possible to prevent a decrease in coding efficiency.

In the image coding device 100 and the image decoding device 200 according to the present embodiment, the refinement units 111C and 241C can be configured to include, in the searching cost, the norm of the difference vector between the initial position and the searched point. In this case, when the index value for evaluating the similarity such as the sum of absolute errors becomes substantially the same value at each searched point, a correction amount of the motion vector can be prevented from being unnecessarily increased by regularizing with the norm of the difference vector, and a decrease in coding efficiency can be prevented.

In the image coding device 100 and the image decoding device 200 according to the present embodiment, the determination as to whether or not to execute the BDOF processing in the prediction signal generation units 111D and 241D can be based on a condition that the similarity (for example, the sum of absolute differences) between the reference block on the L0 side and the reference block on the L1 side is larger than a predetermined threshold value (alternatively, the similarity is equal to or more than the predetermined threshold value). Similarly to the refinement processing, the BDOF processing is also effective in a case where the correlation among the block, the reference block on the L0 side, and the reference block on the L1 side is high. Therefore, with the above-described configuration, it is possible to prevent the BDOF processing from being executed for the block having a low correlation in the time direction without transmitting additional information (information regarding whether or not to apply the BDOF processing) from the image coding device 100 side, and it is possible to prevent a decrease in coding efficiency. In addition, the result of the refinement processing described above can be used for the determination described above. As a result, the processing of calculating the sum of absolute differences described above can be reduced.

The foregoing image encoding device 100 and the image decoding device 200 may also be realized by a program that causes a computer to perform each function (each process).

Note that, in each of the foregoing embodiments, the present invention has been described by taking application to the image encoding device 100 and the image decoding device 200 by way of an example; however, the present invention is not limited only to such devices and can be similarly applied to encoding/decoding systems provided with each of the functions of an encoding device and a decoding device.

According to the present invention, it is possible to prevent a decrease in coding efficiency by not executing the refinement processing on a block having a low correlation in the time direction.

### REFERENCE SIGNS LIST

10 Image processing system
100 Image encoding device
111, 241 Inter-prediction unit
111A Motion vector searching unit
111B Motion vector coding unit
111C, 241C Refinement unit
111D, 241D Prediction signal generation unit
112, 242 Intra-prediction unit
121 Subtractor
122, 230 Adder
131 Transformation/quantization unit
132, 220 Inverse transformation/inverse quantization unit
140 Encoding unit
150, 250 In-loop filter processing unit
160, 260 Frame buffer
200 Image decoding device
210 Decoding unit
241B Motion vector decoding unit

## Claims

1. An image decoding device comprising:
a motion vector decoding unit configured to decode a motion vector from coded data; and
a refinement unit configured to
search for the motion vector with a value of the motion vector decoded by the motion vector decoding unit as an initial value, and
discard a search result at an integer pixel interval position in a case where a difference value between a searching cost at an initial searched point and a minimum searching cost in the searching at the integer pixel interval position is smaller than a predetermined threshold value or in a case where the difference value is equal to or smaller than the threshold value.

2. An image decoding method comprising:
decoding a motion vector from coded data;
searching for the motion vector with a value of the decoded motion vector as an initial value; and
discarding a search result at an integer pixel interval position in a case where a difference value between a searching cost at an initial searched point and a minimum searching cost in the searching at the integer pixel interval position is smaller than a predetermined threshold value or in a case where the difference value is equal to or smaller than the threshold value.

3. A program used in an image decoding device, the program causing a computer to execute:
decoding a motion vector from coded data;
searching for the motion vector with a value of the decoded motion vector as an initial value; and
discarding a search result at an integer pixel interval position in a case where a difference value between a searching cost at an initial searched point and a minimum searching cost in the searching at the integer pixel interval position is smaller than a predetermined threshold value or in a case where the difference value is equal to or smaller than the threshold value.
